# EUROPÄISCHE PATENTSCHRIFT

(11) **EP 0 376 018 B1**
(45) Veröffentlichungstag und Bekanntmachung des Hinweises auf die Patenterteilung: **12.05.1993**
(21) Anmeldenummer: 89122637.5
(22) Anmeldetag: 08.12.1989
(51) Int. Cl.: A01C 15/04, A01C 7/08

(54) **Verteilmaschine**
Distributor
Machine distributrice

(30) Priorität: 22.12.1988 DE 3843141
(43) Veröffentlichungstag der Anmeldung: 04.07.1990
(73) Patentinhaber: Amazonen-Werke H. Dreyer GmbH & Co. KG, D-49205 Hasbergen (DE)
(72) Erfinder: Dryer, Heinz, Dipl.-Ing. Dr., D-4507 Hasbergen (DE); Scheufler, Bernd, Dr., D-4507 Hasbergen (DE); Grosse-Scharmann, Franz, Dr., D-2872 Hude 1 (DE)
(74) Vertreter: Grünecker, Kinkeldey, Stockmair & Schwanhäusser Anwaltssozietät

(56) Entgegenhaltungen:
- EP-A- 0 252 348
- GB-A- 1 559 424

## Beschreibung

Die Erfindung betrifft eine Verteilmaschine gemäß Oberbegriff des Patentanspruches 1.

Derartige Verteilmaschinen sind seit langem in der landwirtschaftlichen Praxis bekannt. Bedingt durch die Vielzahl der durchzuführenden Dünge- und Pflegearbeiten im Getreideanbau, weisen diese Verteilmaschinen Fahrgassenschalteinrichtungen zum Anlegen von Fahrgassen auf. Die Fahrgassen sind in gleichmäßigen Abständen angelegte, von Saatgut freigehaltene Streifen und dienen als Führungsbahnen für die nachfolgenden Bearbeitungsvorgänge des Getreides. Weiterhin soll durch die Anlage von Fahrgassen vermieden werden, das Getreidepflanzen durch die Schlepperräder während der Dünge- und Pflegearbeiten niedergewalzt werden. Bei dem Anlegen der Fahrgassen wird die Saatgutzufuhr zu den sog. Fahrgassensäscharen dadurch unterbrochen, daß der Antrieb für die diesen Säscharen zugeordneten Dosiereinrichtungen unterbrochen wird, so daß kein Saatgut in die zu den Fahrgassensäscharen führenden Saatgutleitungen gefördert wird. Diese Saatgutunterbrechung zu den Fahrgassensäscharen beim Anlegen von Fahrgassen führt zur Erzeugung der Saatgutfreien Streifen. Hierdurch kommt es zu einer Reduzierung der Aussaatmenge, bezogen auf die Arbeitsbreite der Verteilmaschine und der Aussaatfläche einer zu besäenden Ackerfläche und zwar um den Betrag der Fläche, die sich durch die Saatgutfreien Fahrgassen ergibt. Hierdurch verringert sich die Anzahl der pro Flächeneinheit auflaufenden Pflanzen, was zu einer Reduzierung des möglichen Ernteertrages führt.

Des weiteren ist durch die EP-A 02 52 348 eine pneumatische Verteilmaschine bekannt. Diese Verteilmaschine weist ein zentrales Dosiersystem auf, von dem aus das zentral dosierte Saatgut über eine senkrecht stehende Druckluftleitung einem Verteilerkopf mit mehreren Abgängen zugeleitet wird. Von den einzelnen Abgängen des Verteilerkopfes wird das aufgeteilte Material den über Saatleitungen an den Verteilerkopf angeschlossenen Säscharen zugeführt. Der Verteilerkopf weist eine bestimmte Anzahl von Abgängen auf, wobei jeweils an jedem Abgang ein Saatleitungsrohr mit einem Säschar angeschlossen ist. Auch diese pneumatische Verteilmaschine ist mit einer Fahrgassenschalteinrichtung ausgerüstet. Mittels der Fahrgassenschalteinrichtung wird auch hier in periodischer Wiederkehr die Saatgutzufuhr zu den in den anzulegenden, von Saatgut freizuhaltenden Fahrgassen angeordneten Säscharen über zu betätigende Absperreinrichtungen unterbrochen, indem die den Fahrgassensäscharen zugeordneten Abgänge verschlossen werden, wobei dann das den verschlossenen Abgängen zudosierte Saatgut wieder in den Saatgutvorratsbehälter zurückgeleitet wird.

Dadurch, daß das beim Anlegen einer Fahrgassen den abgesperrten Abgängen der Fahrgassensäschare zudosierte Saatgut in den Vorratsbehälter zurückgeleitet wird, kommt es auch hier zu einer Reduzierung der Aussaatmenge und somit der auflaufenden Pflanzen, da sich auch hier die Aussaatfläche um den Betrag der Fläche, die sich durch die Saatgutfreien Fahrgassen ergibt, reduziert. Auch hier ergeben sich die bereits aufgezeigten Nachteile.

Der Erfindung liegt nun die Aufgabe zugrunde, die gattungsgemäße Verteilmaschine derart zu verbessern, daß stets immer die gleiche Saatgutmenge, bezogen auf die Arbeitsbreite der Verteilmaschine, im Boden abgelegt wird.

Diese Aufgabe wird in erfindungsgemäßer Weise dadurch gelöst, daß mittels der Umlenkeinrichtung die Saatgutzufuhr zu einzelnen Säscharen durch Umleitung des an sich diesen Säscharen zudosierten Materials in Nachbarsäschare der abgeschalteten Säschare unterbrechbar ist. Infolge dieser Maßnahme bleibt die Aussaatmenge der Verteilmaschine immer konstant, gleichgültig, ob eine Fahrgasse angelegt wird oder nicht, es wird stets immer die gleiche Saatgutmenge, bezogen auf die Arbeitsbreite der Verteilmaschine, im Boden abgelegt.

Die Umleitung des an sich den Fahrgassensäscharen beim Anlegen einer Fahrgasse zudosierten Saatgutes jeweils in das Nachbarsäschar bewirkt, daß es hierbei zu keiner Reduzierung der Aussaatmenge und somit der auflaufenden Pflanzen kommt. Die Aussaatmengen des dem jeweiligen Fahrgassensäschar unmittelbar benachbarten Säschares ist höher als die der übrigen Säschare, so daß auch die Anzahl der auflaufenden Pflanzen innerhalb dieser Reihe größer ist. Das sich auch diese Pflanzen genausogut entwickeln wie die Pflanzen der Reihen mit der geringeren Aussaatstärke, ist darin begründet, daß das aus dem breiteren Standraum sich ergebene größere Angebot an Wachstumsfaktoren von den Pflanzen besser genutzt wird. Hierdurch werden die sich durch das Anlegen von Fahrgassen, hinsichtlich der Aussaatflächenreduzierung, ergebenen Nachteile ausgeglichen. Durch diese erfindungsgemäße Ausbildung der Verteilmaschine läßt sich bei der Getreideernte ein Mehrertrag erwirtschaften.

In der landwirtschaftlichen Praxis sind pneumatische, mit einer Fahrgassenschaltung ausgerüstete Verteilmaschinen bekannt, bei denen beim Anlegen von Fahrgassen die zu den Leitungen der Fahrgassensäschare führenden Abgänge in der Nähe des Verteilerkopfes einfach abgesperrt werden. Die an sich den Fahrgassensäscharen zudosierte Saatgutmenge wird beim Anlegen von Fahrgassen zusätzlich auf die übrigen Saatleitungen über den Verteilerkopf aufgeteilt, wobei den einzelnen Säscharen dann unterschiedliche Saatgutmengen zudosiert werden. Dieses ist von erheblichem Nachteil, da durch die unterschiedliche, nicht kontrollierbare Saatgutmengenverteilung auf die übrigen Saatleitungen, die Getreideaussaatstärke aller Säscharreihen derart erhöht wird, daß sich über die gesamte Arbeitsbreite der Verteilmaschine ungünstige Standraumverhältnisse für die einzelnen Pflanzen ergeben, so daß sich die Pflanzen nicht so gut entwickeln und es hierdurch zu Ertragseinbußen kommt.

Bei der Ausbildung der Verteilmaschine ist in erfindungsgemäßer Weise vorgesehen, daß das an sich jeweils einem Fahrgassensäschar zudosierte Material entweder nur zu einem unmittelbaren Nachbarsäschar umgeleitet wird, oder das das an sonsten dem jeweiligen Fahrgassensäschar zudosierte Material gleichmäßig jeweils auf das rechte und linke Nachbarsäschar aufgeteilt wird. Wird nun zur Erzeugung eines Saatgutfreien Streifens die Saatgutzufuhr jeweils von zwei Fahrgassensäscharen umgelenkt, wird das Saatgut des jeweiligen Fahrgassensäschares beim Anlegen einer Fahrgasse, jeweils zu seinem unmittelbaren Nachbarsäschar umgeleitet.

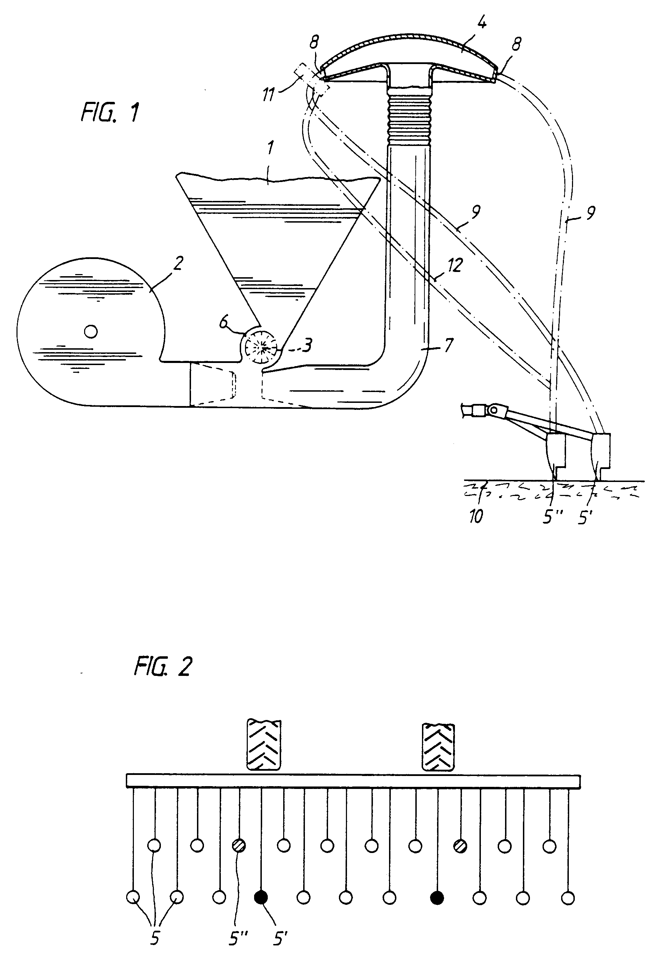

Weitere Einzelheiten der Erfindung sind den übrigen Unteransprüchen, der Beispielsbeschreibung und den Zeichnungen zu entnehmen. Hierbei zeigt
- Fig. 1: das Verteilsystem einer pneumatischen Verteilmaschine in Prinzipdarstellung,
- Fig. 2: die Anordnung der Säschare bei einer Verteilmaschine in der Draufsicht und in Prinzipdarstellung und
- Fig. 3: eine erfindungsgemäß ausgebildete Umlenkeinrichtung in Prinzipdarstellung in der Seitenansicht.

Die als Sämaschine ausgebildete pneumatische Verteilmaschine weist den Vorratsbehälter 1, das Gebläse 2, das zentrale Dosierorgan 3, den Verteilerkopf 4 und die an dem Rahmen angelenkten Säschare 5 auf. Das sich im Vorratsbehälter 1 befindliche Saatgut wird über das zentrale Dosierorgan 3, welches von einem auf dem Boden abrollenden Rad in bekannter und daher nicht näher dargestellter Weise angetrieben wird, über die Schleuse 6 in die zentrale Förderleitung 7 gefördert, wo es von dem von dem Gebläse 2 erzeugten Luftstrom erfaßt und zum Verteilerkopf 4 geblasen wird. An dem Verteilerkopf 4 befinden sich die verschiedenen Abgänge 8, an denen jeweils eine Saatleitung 9 angeschlossen ist. Jede Saatleitung 9 führt zu jeweils einem Säschar 5. Über den Verteilerkopf 4 wird das Saatgut auf die einzelnen Abgänge 8 gleichmäßig aufgeteilt und gelangt über die Saatleitungen 9 zu den Säscharen 5, mittels derer das Saatgut im Boden 10 abgelegt wird.

Wenn an sämtlichen Abgängen 8 jeweils eine Saatleitung 9 bzw. diesen Abgängen 8 jeweils ein Säschar 5 zugeordnet ist, wird das Saatgut jedem Säschar 5 bzw. jeder Saatleitung 9 in gleichgroßen Mengen über den Verteilerkopf 4 zudosiert.

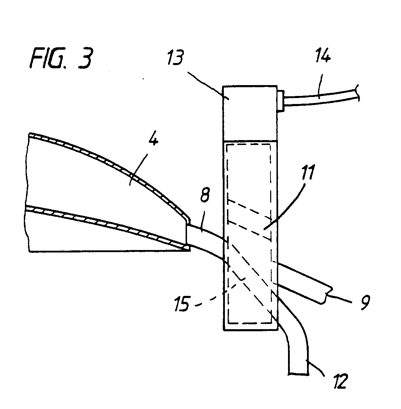

Wenn nun in gleichmäßigen Abständen beim Ausbringen des Saatgutes Fahrgassen angelegt werden sollen, indem bei den zu den Säscharen 5′, die als Fahrgassensäschare bezeichnet werden, führenden Saatleitungen 9, die Saatgutzufuhr unterbrochen wird, indem das an sich diesen Säscharen 5′ zudosierte Saatgut über die jeweils als Umlenkschieber 11 ausgebildete Umlenkeinrichtung beim Anlegen der Fahrgassen durch Umlenkung unterbrochen wird. Beim Anlegen von Fahrgassen wird also das eigentlich den Fahrgassensäscharen 5′ zudosierte Saatgut durch Betätigung der Umlenkschieber 11 über die zusätzlich am Umlenkschieber 11 angeordnete Umlenksaatleitung 12 in die jeweilige Saatleitung 9 des unmittelbar benachbarten Säschares 5˝ umgelenkt. Die jeweiligen Umlenkschieber 11 werden über den jeweiligen Elektromagneten 13 elektromagnetisch betätigt. Über das Kabel 14, welches mit der nicht dargestellten Fahrgassenschalteinrichtung verbunden ist, wird der Elektromagnet 13 und somit der Schieber 11 betätig. Der Schieber 11 gemäß Fig. 3 ist in der Stellung eingezeichnet, bei der über den sich im Schieber befindlichen Verbindungskanal 15 der Abgang 8, der zu einem Fahrgassensäschar 5′ führt, mit der Umlenksaatleitung 12 verbunden ist, so daß das dem Abgang 8 zudosierte Material über den Verbindungskanal 15 des Schiebers 11 der Umlenksaatleitung 12 zugeleitet und somit dem Nachbarsäschar 5˝ des Fahrgassensäschares 5′ zugeführt wird.

Es ist auch möglich, daß ansonsten dem Fahrgassensäschar 5′ zudosierte Material jeweils auf die beiden unmittelbar benachbarten Säschare eines Fahrgassensäschares 5′ aufzuteilen. Des weiteren berücksichtigt die Erfindung auch, daß die Saatgutzufuhr beim Erzeugen eines saatgutfreien Streifens auch von zwei nebeneinander angeordneten Fahrgassensäscharen 5′ zu erzeugen ist. Hierbei wird dann das eigentlich den Fahrgassensäscharen 5′ zudosierte Material jeweils auf das dem jeweiligen Fahrgassensäschar 5′ unmittelbar benachbarte Säschar umgelenkt.

## Patentansprüche

1. Verteilmaschine zum Verteilen von Saatgut mit einem Dosiersystem, von dem aus das dosierte Saatgut über an Saatgutleitungen angeschlossenen Säscharen gleichmäßig zugeführt wird, wobei die Saatgutzufuhr zu einzelnen Säscharen unterbrechbar ist und wobei eine Umlenkeinrichtung vorhanden ist, dadurch gekennzeichnet, daß mittels der Umlenkeinrichtung die Saatgutzufuhr zu einzelnen Säscharen (5′) durch Umleitung des an sich diesen Säscharen (5′) zudosierten Materials in Nachbarschare (5˝) der abgeschalteten Säschare (5′) unterbrechbar ist.

2. Verteilmaschine nach Anspruch 1, dadurch gekennzeichnet, daß an der Verteilmaschine eine Fahrgassenschalteinrichtung mit einer in periodischer Wiederkehr zu betätigende Absperreinrichtung für die Zufuhr von Saatgut zu den in den Fahrgassen angeordneten Säscharen angeordnet ist, daß über die Umlenkeinrichtung (11) beim Absperren der Saatgutzufuhr zu den Fahrgassensäscharen (5′) das den Fahrgassensäscharen (5′) zudosierte Saatgut in die Saatleitungen (9,12) der unmittelbaren Nachbarsäschare (5˝) umgeleitet wird.

3. Pneumatische Verteilmaschine zum pneumatischen Verteilen von Saatgut mit einem zentralen Dosiersystem, von dem aus das dosierte Saatgut über einen Verteilerkopf den an dem Verteilerkopf über Saatleitungen angeschlossenen Säscharen gleichmäßig zugeführt wird, wobei einzelne Abgänge von dem Verteilerkopf über Absperreinrichtungen derart verschließbar sind, daß einer geringeren Anzahl von Säscharen als der Anzahl von Abgängen an dem Verteilerkopf das Saatgut zuführbar ist, wobei das zu den gesperrten Abgängen dosierte Material umgeleitet wird und wobei das den abgesperrten Abgängen (8) zudosierte Material mittels einer Umlenkeinrichtung umleitbar ist, dadurch gekennzeichnet, daß das zudosierte Material mittels der Umlenkeinrichtung in die Saatleitungen (9,12) der unmittelbaren Nachbarsäschare (5˝) umleitbar ist.

4. Pneumatische Verteilmaschine nach Anspruch 3, dadurch gekennzeichnet, daß an der Verteilmaschine eine Fahrgassenschalteinrichtung mit einer in periodischer Wiederkehr zu betätigende Absperreinrichtung für die Zufuhr von Saatgut zu den in den Fahrgassen angeordneten Säscharen angeordnet ist, daß über die Umlenkeinrichtung (11) beim Absperren der Saatgutzufuhr zu den Fahrgassensäscharen (5′) das den Fahrgassensäscharen (5′) zudosierte Saatgut in die Saatleitungen (9,12) der unmittelbaren Nachbarsäschare (5˝) umgeleitet wird.

5. Verteilmaschine nach einem oder mehreren der vorstehenden Ansprüche, dadurch gekennzeichnet, daß das den abgesperrten Abgängen (8) zudosierte Material jeweils über die Umlenksaatleitung (12) der Saatleitung (9) des unmittelbar benachbarten Säschares (5˝) zugeführt wird.

6. Verteilmaschine nach einem oder mehreren der vorstehenden Ansprüche,, dadurch gekennzeichnet, daß das den abgesperrten Abgängen (8) zudosierte Material jeweils den Saatleitungen (9) zumindest zwei unmittelbar benachbarter Säschare (5˝) zugeführt wird.

7. Pneumatische Verteilmaschine nach Anspruch 3 oder 4, dadurch gekennzeichnet, daß die jeweilige Saatleitung (9) von welcher das dosierte Material umgeleitet werden soll, eine Umlenkvorrichtung (11) mit einem oder mehreren Abgängen (12) aufweist.

## Claims

1. Distributing machine for distributing seed material, including a metering system, from which the metered seed material is supplied uniformly via the intermediary of sowing coulters connected to seed material lines, the supply of seed material to individual sowing coulters being interruptable, and a guiding device being provided, characterised in that the supply of seed material to individual sowing coulters (5') is interruptable by means of the guiding device as a result of diverting the material, which is supplied to said sowing coulters (5') in metered quantities, into neighbouring coulters (5'') of the disconnected sowing coulters (5').

2. Distributing machine according to claim 1, characterised in that a tramline switching arrangement, having a shut-off device which is to be actuated in periodic cycles, is disposed on the distributing machine for the supply of seed material to the sowing coulters disposed in the tramlines, and in that, upon the supply of seed material to the tramline sowing coulters (5') being shut-off, the seed material which is supplied to the tramline sowing coulters (5') in metered quantities is diverted into the seed lines (9, 12) of the immediate neighbouring sowing coulters (5'') via the intermediary of the guiding device (11).

3. Pneumatic distributing machine for the pneumatic distribution of seed material, including a central metering system, from which the metered seed material is uniformly supplied, via the intermediary of a distributor head, to the sowing coulters connected to the distributor head via the intermediary of seed lines, individual outlets from the distributor head being closable via the intermediary of shut-off devices such that the seed material is suppliable to a smaller number of sowing coulters than the number of outlets on the distributor head, the material which is metered at the shut-off outlets being diverted, and the material which is supplied to the shut-off outlets (8) in metered quantities being divertable by means of a guiding device, characterised in that the material, supplied in metered quantities, is divertable into the seed lines (9, 12) of the immediate neighbouring sowing coulters (5'') by means of the guiding device.

4. Pneumatic distributing machine according to claim 3, characterised in that a tramline switching arrangement, having a shut-off device which is to be actuated in periodic cycles, is disposed on the distributing machine for supplying seed material to the sowing coulters disposed in the tramlines, and in that the seed material, which is supplied to the tramline sowing coulters (5') in metered quantities, is diverted into the seed lines (9, 12) of the immediate neighbouring sowing coulters (5'') via the intermediary of the guiding device (11) upon the supply of seed material to the tramline sowing coulters (5') being shut-off.

5. Distributing machine according to one or more of the preceding claims, characterised in that the material, which is supplied to the shut-off outlets (8) in metered quantities, is supplied to the seed line (9) of the directly adjacent sowing coulter (5'') via the intermediary of the seed guide line (12).

6. Distributing machine according to one or more of the preceding claims, characterised in that the material, which is supplied to the shut-off outlets (8) in metered quantities, is supplied to the seed lines (9) of at least two directly adjacent sowing coulters (5'').

7. Pneumatic distributing machine according to claim 3 or 4, characterised in that the seed line (9), from which the metered material is to be diverted, has a guiding device (11) provided with one or more outlets (12).

## Revendications

1. Distributeur pour distribuer des semences à l'aide d'un système de dosage, selon lequel de la semence dosée est transférée par des socs de semoirs reliés aux conduites à semence, régulièrement, l'alimentation en semence des différents socs de semoirs pouvant être interrompue, ce distributeur comportant une installation de déviation, distributeur caractérisé en ce que l'installation de déviation peut commuter l'alimentation en semence vers les différents socs de semoirs (5') par déviation des produits dosés pour ces socs (5') vers les socs (5'') voisins des socs (5') non alimentés.

2. Distributeur selon la revendication 1, caractérisé en ce qu'il comporte une installation de commutation des voies de passage avec une installation d'arrêt actionnée de manière répétée périodiquement pour l'alimentation en semence des socs de semoirs associés aux voies de passage, et lorsque l'alimentation en semence des socs (5') associés aux voies de passage est coupée cette quantité de semence ainsi dosée est déviée par l'installation de déviation (11) dans les conduites à semence (9, 12) des socs directement voisins (5'').

3. Distributeur pneumatique pour la distribution pneumatique de semence à l'aide d'un système central de dosage à partir duquel la semence dosée est fournie régulièrement par une tête de distribution aux socs de semoirs reliés à la tête de distribution par des conduites à semence et les différentes sorties de la tête de distribution peuvent être fermées par des installations de coupure de façon que les semences soient fournies à un nombre de socs de semoirs inférieur au nombre de sorties de la tête de distribution, le produit dosé destiné aux sorties coupées étant dévié et le produit dosé destiné aux sorties coupées (8) est dévié à l'aide d'une installation de déviation, distributeur caractérisé en ce que le produit dosé est dévié par l'installation de déviation dans les conduites à semence (9, 12) des socs (5'') directement voisins.

4. Distributeur pneumatique selon la revendication 3, caractérisé en ce qu'il comporte une installation de commutation des voies de passage avec une installation d'arrêt actionnée à répétition périodique pour couper l'alimentation en semence vers les socs associés aux voies de passage, et lors de la coupure de l'alimentation en semence vers les socs (5') des voies de passage, l'installation de déviation (11) dévie les semences dosées pour les socs des voies de passage (5') dans les conduites à semence (9, 12) des socs à semence (5'') directement voisins.

5. Distributeur selon l'une ou plusieurs des revendications précédentes, caractérisé en ce que le produit dosé pour les sorties (8) coupées est fourni par l'installation de déviation (12) à la conduite à semence (9) du soc de semoir (5'') directement voisin.

6. Distributeur selon l'une ou plusieurs des revendications précédentes, caractérisé en ce que le produit dosé pour les sorties coupées (8) est fourni respectivement aux conduites à semence (9) d'au moins deux socs de semoirs (5'') voisins.

7. Distributeur pneumatique selon la revendication 3 ou 4, caractérisé en ce que la conduite à semence (9) respective, dont on veut dévier les produits, comporte une installation de déviation (11) avec une ou plusieurs sorties (12).
